**Europäisches Patentamt**

(19) **European Patent Office**

**Office européen des brevets**

(11) Numéro de publication: **0 106 717**
**B1**

(12) **FASCICULE DE BREVET EUROPEEN**

(45) Date de publication du fascicule du brevet:
26.08.87

(51) Int. Cl.⁴: **G 02 F 1/01**, G 02 F 1/135

(21) Numéro de dépôt: 83401674.3

(22) Date de dépôt: **17.08.83**

(54) **Ecran de visualisation à adressage actif par photoconducteur.**

(30) Priorité: **31.08.82 FR 8214893**

(43) Date de publication de la demande:
**25.04.84 Bulletin 84/17**

(45) Mention de la délivrance du brevet:
**26.08.87 Bulletin 87/35**

(84) Etats contractants désignés:
**DE GB IT NL**

(56) Documents cités:
**FR - A - 2 101 608**
**GB - A - 1 362 061**
**GB - A - 2 067 812**

**IBM TECHNICAL DISCLOSURE BULLETIN, vol. 12, no. 10, mars 1970, New York (US) W.P. HORNBERGER: "Liquid crystal display", pages 1697-1698**
**PROCEEDINGS OF THE IEEE, vol. 59, no. 11, novembre 1971, New York (US) B.J. LECHNER: "Liquid crystal matrix displays", pages 1566-1579**

(73) Titulaire: **THOMSON-CSF, 173, Boulevard Haussmann, F-75379 Paris Cedex 08 (FR)**

(72) Inventeur: **Mourey, Bruno, THOMSON-CSF SCPI 173, bld Haussmann, F-75379 Paris Cedex 08 (FR)**
Inventeur: **Perbet, Jean-Noel, THOMSON-CSF SCPI 173, bld Haussmann, F-753709 Paris Cedex 08 (FR)**

(74) Mandataire: **Lepercque, Jean et al, THOMSON-CSF SCPI 19, avenue de Messine, F-75008 Paris (FR)**

## Description

La présente demande de brevet concerne un écran d'un dispositif d'affichage, par exemple à accès matriciel, qui utilise un photoconducteur comme élément de commutation. La présence d'un élément jouant le rôle d'interrupteur permet d'améliorer les caractéristiques de cet écran (taux de multiplexage élevé, meilleur contraste).

Il existe plusieurs systèmes utilisant l'association photoconducteur-élément électrooptique qui permettent la conversion d'image ou la projection d'image télévision. Tous ces systèmes ont un adressage point par point et utilisent pour l'inscription soit un faisceau laser, soit un balayage à point lumineux mobile. L'un de ces systèmes à fait l'objet d'un brevet français de la Demanderesse, déposé le 11 juin 1969 et publié sous le numéro FR-A 2 049 483. Il utilise un balayage à point lumineux mobile.

Il est connu également d'utiliser, dans les écrans à accès matriciel, des effets physiques (effet varistance, effet thermique) pour découpler les adressages lignes et colonnes et ne plus être limité du point de vue des tensions appliquées à des multiplexages habituels (par exemple V/3V) qui nécessitent un seuil de l'effet électrooptique. L'absence d'une réponse optique franchement non linéaire de la part de la plupart des cristaux liquides en fonction de la tension appliquée est le principal obstacle à la réalisation de dispositifs d'affichage à taux élevé de multiplexage. En plaçant, en série avec le cristal liquide, des éléments qui agissent comme des interrupteurs sur les points de l'écran matriciel, on peut augmenter sensiblement le taux de multiplexage.

Les systèmes classiques utilisant un photoconducteur associé à un élément électrooptique possèdent l'inconvénient majeur de nécessiter un laser ou un tube à rayons cathodiques qui sont des éléments encombrants. Le brevet français déposé le 12 juillet 1971 sous le numéro 7 125 541 et publié sous le numéro FR-A 2 101 608 décrit un tel écran qui correspond à l'écran défini dans le préambule de la présente revendication 1. Cet écran connu comporte une couche de matière photoconductrice associé à une couche de cristal liquide. Le fonctionnement de cet écran se fait par balayage de l'écran à l'aide d'un faisceau lumineux. L'article «Liquid crystal display» de W.P. Hornberger publié dans IBM Technical Disclosure bulletin, vol. 12, n° 10 de mars 1970, pages 1697–1698, décrit également un écran à adressage électrique comportant une couche de cristal liquide muni d'une couche d'un matériau photoconducteur et éclairé par une image formée par l'adressage électrique de deux réseaux d'électrodes.

Dans les systèmes où l'élément électrooptique est associé à un élément non linéaire, tel qu'une varistance, il est souvent difficile d'assurer un découplage efficace des points de l'écran.

Afin de pallier ces inconvénients, l'invention propose d'assurer un bon découplage des points de l'écran par l'intermédiaire d'éléments photoconducteurs, chaque élément étant associé à un point de l'écran. Leur adressage peut être effectué par un réseau de bandes électroluminescentes déposées en couche épaisse.

L'invention a donc pour objet un écran de visualisation à adressage électrique destiné à représenter une image formée à partir d'éléments de l'écran définis géométriquement par les points d'intersection d'un premier et d'un second réseaux constituant une matrice, lesdits éléments étant formés par la mise en série d'un matériau électrooptique et d'un matériau photoconducteur entre des premières électrode et au moins une contre-électrode, le matériau photoconducteur étant en contact avec la contreélectrode, lesdites premières électrodes étant des électrodes vidéo disposées suivant ledit premier réseau, ledit matériau photoconducteur étant soumis partiellement à l'effet d'un rayonnement lumineux caractérisé en ce que ledit matériau photoconducteur se présente sous forme de rangées de plots indépendants, isolés les uns des autres par un matériau isolant et situés chacun à l'un desdits points d'intersection, et en ce que ledit rayonnement lumineux éclaire successivement les rangées de plots en matériau photoconducteur suivant ledit second réseau.

D'autres aspects et avantages de l'invention seront mieux compris à l'aide de la description ci-après, fournie à titre d'exemple non limitatif, ainsi que des figures annexées parmi lesquelles:

les figures 1 à 3 sont des vues isométriques représentant différents stades de réalisation d'un écran selon l'invention;

la fig. 4 est une vue partielle en coupe d'un écran selon l'invention;

la fig 5 est une vue partielle en coupe d'une variante d'un écran selon l'invention.

La description qui va suivre portera sur un écran matriciel dans lequel l'élément électrooptique est un cristal liquide. Parmi les différentes méthodes employées pour visualiser une image sur un écran à cristal liquide, l'une de celles qui présentent le plus d'avantages est l'adressage matriciel. Elle permet en effet une economie considérable des dispositifs électroniques de commande. Un adressage matriciel signifie que chaque élément de l'écran est défini par l'intersection d'une ligne et d'une colonne. La coïncidence des informatios électriques provenant d'une ligne et d'une colonne induit au point d'intersection l'effet optique souhaité. L'économie en dispositifs de commande est d'autant plus élevée que le nombre d'éléments de l'écran est grand puisque p lignes et q colonnes définissent p.q éléments de visualisation.

L'adressage d'un élément de l'écran au moyen de tensions de commande appliquées à la ligne et à la colonne qui le concernent n'a pas besoin d'être maintenu si l'on adopte une technique de multiplexage temporel permettant par récurrence de rafraîchir l'état de l'écran. Cette technique se fonde sur un effet de persistance qui peut être physiologique ou disponible au sein de l'élément de l'écran. Dans le cas de dispositif d'affichage à cristaux liquides, on peut assimiler la cellule élémentaire à un condensateur dont la constante de temps est suffisante pour maintenir la charge entre deux adressages transitoires successifs. Pour appliquer la tension de commande en un temps bref, on monte en série avec la cellule capacitive une résistance non linéaire, c'est-à-dire un élément qui est pratiquement isolant en deça d'un seuil de tension et qui devient de plus en plus conducteur auàdelà de ce seuil. La mise en série avec le cristal liquide d'un composant non linéaire permet d'appliquer sur les cellules élémentaires des tensions de commande élevées et donc d'augmenter le contraste. Dans le cas de notre invention, ce sont des plots photoconducteurs qui réalisent les éléments non linéaires.

Une façon de réaliser l'écran selon l'invention est la suivante.

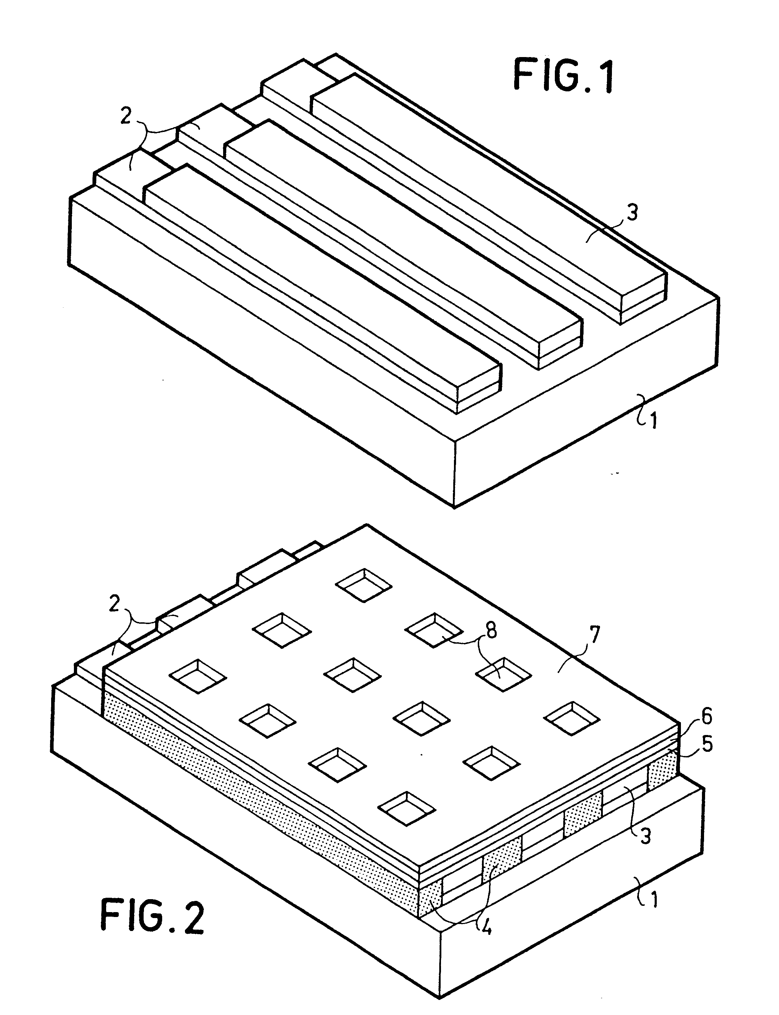

Pour une meilleure compréhension de l'invention, on a choisi de ne représenter qu'un nombre limité de lignes et de colonnes: 3 lignes et 4 colonnes définiront l'écran matriciel. La figure 1 représente une première étape de réalisation. Sur un substrat 1 isolant de deux à trois centimètres d'épaisseur, par exemple en verre, on a déposé des bandes conductrices 2 qui définiront les lignes de la matrice d'adressage. Le dépôt de ces électrodes peut être réalisé par sérigraphie ou par évaporation pour avoir des épaisseurs de l'ordre de quelques milliers d'angströms. Les électrodes lignes 2 peuvent avoir une largeur d'environ 150 à 200 µm. Sur les électrodes 2, on dépose alors par sérigraphie ou toute autre méthode des bandes électroluminescentes 3 en couche épaisse. L'épaisseur des bandes 3 peut être comprise entre 15 et 25 µm. Le matériau qui les compose peut être formé à partir d'une poudre à base de sulfure de zinc ZnS dopé par du manganèse ou du cuivre suivant la couleur du rayonnement optique désiré à laquelle on ajoute un liant. Les bandes électroluminescentes de ce type fonctionnent généralement sous des tensions alternatives délivrées par le secteur, par exemple de l'ordre de 220 V et des fréquences de 50 Hz ou plus. L'intervalle entre les connexions de lignes 2 recouvertes des bandes luminescentes 3 est alors comblé par un isolant opaque déposé par sérigraphie. Cet isolant peut être une résine époxy ou une résine chargée d'un colorant capable d'absorber le spectre de lumière émis par les bandes 3.

La figure 2 représente une étape ultérieure de réalisation. Sur cette figure, on remarque l'isolant 4 qui comble les intervalles entre les connexions de lignes 2 recouvertes des bandes 3. Les autres opérations peuvent être réalisées de la manière suivante. Une contre-électrode transparente 5 est déposée par couche mince ou par sérigraphie sur la face supérieure de la couche formée d'une alternance de bandes isolantes 4 et électroluminescentes 3. La contre-électrode 5 peut être réalisée en oxyde mixte d'indium et d'étain. Elle servira de masse électrique pour l'écran de visualisation. En opérant par sérigraphie, l'épaisseur de la contre-électrode peut atteindre 5000 angströms. Il faut maintenant déposer des plots photoconducteurs sur la contre-électrode en vis-à-vis des connexions de ligne 2, aux intersections des lignes et des colonnes de l'écran matriciel. Pour cela, on dépose d'abord sur la contre-électrode une couche 6 de résine isolante et opaque, puis par une technique de masquage une couche 7 de résine de photogravure qui présente des fenêtres 8 aux emplacements réservés aux plots photoconducteurs. Par gravure de la couche 6 toutes les zones non recouvertes par la résine 7, c'est-à-dire à l'intérieur des fenêtres 8, sont enlevées découvrant ainsi des surfaces élémentaires de la contre-électrode. On dépose ensuite une couche de matériau photoconducteur d'environ 1 µm d'épaisseur qui vient recouvrir la couche 7 et les surfaces de la contre-électrode mises à nu précédemment. Ce matériau photoconducteur peut être du séléniure de cadmium CdSe, matériau qui convient particulièrement bien si les bandes électroluminescentes sont à base de sulfure de zinc dopé au cuivre. Par une technique dite de «lift-off» on enlève la couche 7 et par conséquent la couche de matériau photoconducteur qui la recouvrait.

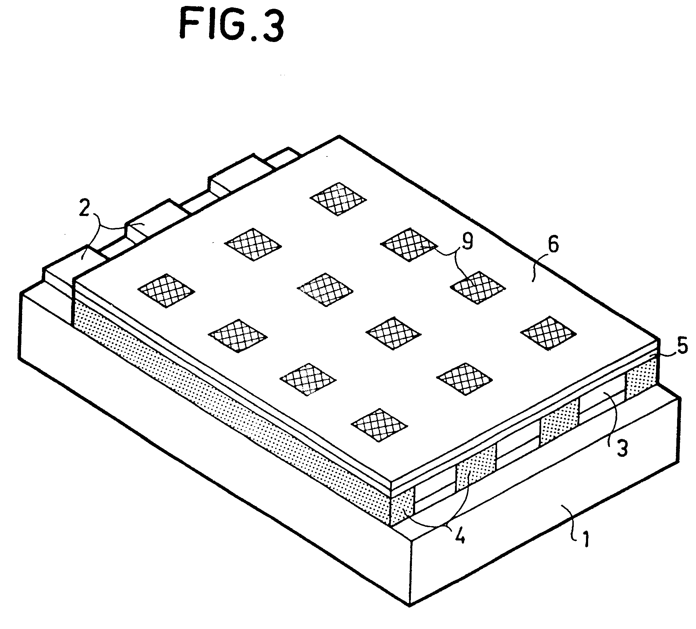

Après cette dernière opération, l'état de l'écran est tel que le représente la figure 3. Sur cette figure, on remarque la contre-électrode 5 recouverte d'une couche d'isolant 6 dans laquelle sont insérés des plots photoconducteurs 9. Ces plots sont en contact avec la contre-électrode et sont régulièrement espacés, en vis-à-vis des bandes électroluminescentes. Sur la face libre de l'ensemble formé par la couche 6 et les plots 9 on dépose alors sous vide, par pulvérisation ou évaporation, une couche mince, conductrice et réfléchissante qui peut être de l'aluminium ou du nickel. On effectue ensuite une attaque sélective de cette couche, par example par photogravure, de façon à disposer de plots réfléchissants ayant environ 1 mm de côté. Chaque plot réfléchissant est en contact avec l'un des plots photoconducteurs et peut être disposé symétriquement par rapport à celui-ci. Les plots réfléchissants définiront des cellules élémentaires de visualisation.

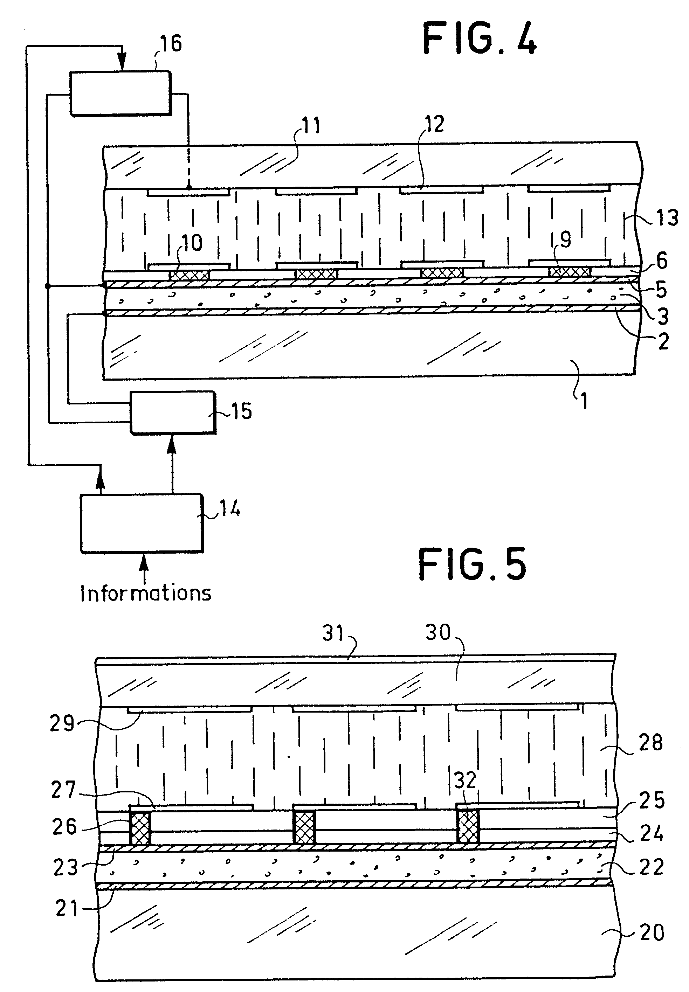

La figure 4 est une vue partielle en coupe d'un écran de visualisation selon l'invention. La coupe a été effectuée parallèlement à une connexion de ligne. On y distingue de bas en haut: le substrat 1, une connexion de ligne 2 recouverte d'une bande électroluminescente 3, la contre-électrode transparente 5, une rangée de plots photoconducteurs 9 placés en vis-à-vis de l'électrode 2 et entourés d'un isolant opaque 6, des plots réfléchissants 10 en contact avec les plots 9, une couche de cristal liquide 13, une lame transparente 11 supportant sur sa face intérieure des connexions de colonnes 12 placées orthogonalement aux connexions de lignes 2. La lame 11 est par exemple en verre; elle peut avoir une épaisseur de 0,6 à 1 mm environ. Les électrodes 12 sont transparentes et peuvent être réalisées en oxyde mixte d'indium et d'étain. Leur espacement est de l'ordre de 100 µm environ, ce qui correspond aux intervalles séparant les plots 10 entre eux. La couche de cristal liquide 13 est enserrée dans l'espace séparant les électrodes 10 et 12, d'une quinzaine de µm, et défini par des cales d'épaisseur non représentées. On peut employer un cristal liquide nématique utilisé en diffusion dynamique (DSM). Afin de provoquer un effet électrooptique plus marqué, les molécules du cristal liquide peuvent être disposées de façon homéotrope à l'état de repos.

Le fonctionnement du système est le suivant. Les informations représentatives de l'image à visualiser sont fournies sous forme électrique à un circuit 14 qui sépare, vers les circuits de commande 15 et 16, les signaux d'adressage lignes et colonnes. Chaque point de l'écran peut être considéré comme étant constitué d'un élément de cristal liquide mis en série avec un plot photoconducteur. Les tensions de commande (V pour un point excité, 0 pour un point non excité), délivrées par le circuit 16, sont appliquées entre les connexions de colonne 12 et la contre-électrode 5. Si on applique à l'une des bandes 3, par l'intermédiaire de la connexion de ligne 2 la supportant et de la contre-électrode 5, une tension V' délivrée par le circuit 15, de l'ordre de 220 V alternative pour l'exemple décrit, cette bande éclaire la rangée de plots photoconducteurs placés audessus d'elle. Cet éclairement provoque une modification sensible de la valeur de leur résistance. Les plots photoconducteurs sont réalisés de telle sorte que, lorsqu'ils sont éclairés par une bande électroluminescente, leur résistance devient très faible par rapport à celle de l'élément de cristal liquide placé en série avec chaque plot. Inversement, si les plots photoconducteurs ne sont pas éclairés, leur résistance est grande devant celle de l'élément de cristal liquide correspondant et la tension vidéo se rapporte presque entièrement sur eux. Un rayon lumineux, incident à l'écran, traverse la lame 11 et les électrodes transparentes 12, se réfléchit sur les électrodes 10 en l'absence de tension vidéo ou est diffusé par le cristal liquide en présence de tension vidéo. Les plots photoconducteurs se comportent donc comme des interrupteurs. En adressant séquentiellement les différentes bandes électroluminescentes et en appliquant simultanément les tensions vidéo en parallèle sur les connexions de colonnes, on obtient une image sur l'écran.

A titre d'exemple non limitatif, on a évalué les différentes valeurs que peuvent prendre les résistances des plots photoconducteurs et des éléments de cristal liquide. Les matériaux envisagés sont du séléniure de cadmium CdSe pour les plots photoconducteurs et une poudre à base de sulfure de zinc ZnS comme élément électroluminescent. Soumise à une tension de 220 V, une bande électroluminescente éclaire les plots photoconducteurs sous un éclairement $I = 1$ mW/cm². Les plots photoconducteurs présentent dans l'obscurité une résistivité $\varrho_o = 0,5 \cdot 10^6 \, \Omega \cdot m$, et sous un éclairement de 1 mW/cm² une résistivité $\varrho = 0,5 \cdot 10^2 \, \Omega \cdot m$.

La résistivité du cristal liquide nématique utilisé est de l'ordre de $\varrho_{XL} = 2 \cdot 10^6 \, \Omega \cdot m$. Un plot photoconducteur de 50 µm de côté et de 1 µm d'épaisseur présente donc une résistance de $2 \cdot 10^8 \, \Omega$ dans l'obscurité et de $2 \cdot 10^4 \, \Omega$ sous un éclairement de 1 mW/cm². Un élément de cristal liquide de 1 mm de côté pour 15 µm d'épaisseur présente une résistance de $3 \cdot 10^7 \, \Omega$. Dans l'obscurité, 13% de la tension vidéo s'applique sur l'élément de cristal liquide. Sous éclairement, pratiquement toute la tension vidéo s'applique sur l'élément de cristal liquide. L'interrupteur ainsi réalisé a une commande indépendante des tensions vidéo appliquées entre les connexions de colonnes et la contre-électrode. L'écran ainsi réalisé permet des taux de multiplexage élevé (supérieur à 1000).

Il entre également dans le cadre de l'invention d'introduire, en parallèle sur chaque élément de visualisation, une capacité de stockage dans le but d'améliorer les caractéristiques de l'écran.

Dans le cadre d'une utilisation en réflexion, on peut utiliser comme matériau électrooptique un mélange de cristaux liquides cholestérique et nématique dans lequel on a incorporé un colorant dichroïque. Lorsqu'ils sont excités, les points de l'écran apparaissent colorés. La coloration des points disparaît avec l'excitation.

Il est également possible de travailler en biréfringence contrôlée ou en nématique en hélice. Il convient alors de modifier certains des constituants de l'écran. La figure 5 est une vue partielle en coupe d'un tel écran. C'est un écran à cristal liquide nématique fonctionnant soit en biréfringence contrôlée, soit en nématique en hélice et qui nécessite donc un système de polariseurs croisés. La structure de l'écran ainsi constitué se présente de la manière suivante, en regardant la figure 5 de bas en haut. Une lame 20 servant de substrat, en verre par exemple, supporte des connexions de lignes 21 sur lesquelles sont déposées des bandes électroluminescentes 22. Comme précédemment, ces bandes sont séparées les unes des autres par un isolant. La contre-électrode 23 possède la propriété de laisser passer la lumière émise par les bandes électroluminescentes vers les plots photoconducteurs 26, et de réfléchir la lumière qui lui arrive sur l'autre face. Les plots 26 sont placés discrètement de façon à ne pas gêner la transmission de la lumière. Ils sont recouverts d'une couche 32 de résine opaque et conductrice, sauf sur la face en contact avec la contre-électrode 23, qui les isole de l'influence du faisceau de lecture. La couche 24 est un analyseur couche mince, la couche 25 un isolant transparent. Les électrodes 27 sont transparentes à la différence des électrodes correspondantes de l'écran décrit précédemment. On trouve ensuite une couche 28 de cristal liquide, des connexions de colonnes 29, une lame transparente 30 et un polariseur 31. La réflexion d'un faisceau lumineux pénétrant dans l'écran par le polariseur 31 s'effectue sur la contre-électrode 23.

L'invention concerne également tout autre effet électrooptique avec ou sans seuil: les dispositifs électrophorétique ou électrochrome par exemple. Tout autre système permettant l'obtention d'un balayage d'une bande lumineuse sur un substrat peut remplacer les bandes électroluminescentes.

**Revendications**

1. Ecran de visualisation à adressage électrique destiné à représenter une image formée à partir d'éléments de l'écran définis géométriquement par les points d'intersection d'un premier et d'un second réseaux constituant une matrice, lesdits éléments étant formés par la mise en série d'un matériau électrooptique (13) et d'un matériau photoconducteur (9) entre des premières électrodes, et au moins une contre-électrode (5), le matériau photoconducteur (9) étant en contact avec la contre-électrode (5), lesdites premières électrodes étant des électrodes vidéo (12) disposées suivant ledit premier réseau, ledit matériau photoconducteur (9) étant soumis partiellement à l'effet d'un rayonnement lumineux, caractérisé en ce que ledit matériau photoconducteur se présente sous forme de rangées de plots (9) indépendants, isolés les uns des autres par un matériau isolant (6) et situés chacun à l'un desdits points d'intersection, et en ce que ledit rayonnement lumineux éclaire successivement les rangées de plots (9) en matériau photoconducteur suivant ledit second réseau.

2. Ecran de visualisation selon la revendication 1, caractérisé en ce que ledit rayonnement lumineux est engendré par des bandes de matériau électroluminescent (3).

3. Ecran de visualisation selon la revendication 2, caractérisé en ce que ledit matériau électroluminescent est à base de sulfure de zinc.

4. Ecran de visualisation selon l'une des revendications 2 ou 3, caractérisé en ce que lesdites bandes électroluminescentes sont insérées entre ladite contre-électrode (5) et des électrodes de commande (2) disposées selon ledit second réseau.

5. Ecran de visualisation selon l'une quelconque des revendications 1 à 4, caractérisé en ce que ledit matériau électrooptique (13) est un cristal liquide.

6. Ecran de visualisation selon la revendication 5, caractérisé en ce que ledit cristal liquide est du type nématique fonctionnant en diffusion dynamique.

7. Ecran de visualisation selon l'une quelconque des revendications 1 à 6, caractérisé en ce qu'une capacité de stockage est branchée en parallèle sur chaque élément de visualisation.

**Patentansprüche**

1. Anzeigeschirm mit elektrischer Adressierung zum Darstellen eines Bildes, das ausgehend von Schirmelementen, die geometrisch durch die Schnittpunkte eines ersten und eines zweiten Netzwerks festgelegt sind und die eine Matrix darstellen, erzeugt wird, wobei diese Elemente durch Inreihefügen eines elektrooptischen Materials (13) und eines photoleitenden Materials (9) zwischen ersten Elektroden, und mindestens einer Gegenelektrode (5) gebildet sind, wobei das photoleitende Material (9) in Kontakt mit der Gegenelektrode (5) ist, wobei weiterhin die ersten Elektroden Videoelektroden (12) sind, die entsprechend dem ersten Netzwerk angebracht sind, wobei ausserdem das photoleitende Material (9) teilweise der Wirkung von Lichtstrahlung ausgesetzt ist, dadurch gekennzeichnet, dass sich das photoleitende Material in der Form einer Reihe unabhängiger Klötzchen (9) darstellt, die voneinander durch ein Isoliermaterial (6) isoliert und je an einem der Schnittpunkte gelegen sind, und dadurch, dass die Lichtstrahlung sukzessive die Reihe von Klötzchen (9) aus photoleitendem Material entsprechend dem zweiten Netzwerk beleuchtet.

2. Anzeigeschirm nach Anspruch 1, dadurch gekennzeichnet, dass die Lichtstrahlung von Streifen aus elektrolumineszierendem Material (3) erzeugt wird.

3. Anzeigeschirm nach Anspruch 2, dadurch gekennzeichnet, dass das elektrolumineszierende Material auf Zinksulfidbasis hergestellt ist.

4. Anzeigeschirm nach einem der Ansprüche 1 oder 2, dadurch gekennzeichnet, dass die elektrolumineszierenden Streifen zwischen der Gegenelektrode (5) und den entsprechend dem zweiten Netzwerk angebrachten Steuerelektroden (2) eingefügt sind.

5. Anzeigeschirm nach einem der Ansprüche 1 bis 4, dadurch gekennzeichnet, dass das elektrooptische Material (13) ein Flüssigkristall ist.

6. Anzeigeschirm nach Anspruch 5, dadurch gekennzeichnet, dass der Flüssigkristall vom nematischen Typ ist und durch dynamische Streuung arbeitet.

7. Anzeigeschirm nach einem der Ansprüche 1 bis 6, dadurch gekennzeichnet, dass eine Speicherkapazität parallel an jedes Anzeigeelement angeschlossen ist.

**Claims**

1. Electrically addressed visualization screen for representing an image formed from screen elements geometrically defined by the intersection points of a first and a second pattern forming a matrix, said elements being formed by the serial arrangement of an electro-optical material (13) and a photoconductive material (9) between first electrodes, and at least one counter-electrode (5), the photoconductive material (9) contacting the counter-electrode (5), said first electrodes being video electrodes (12) located along the first pattern, and said photoconductive material (9) being partially subjected to the effect of a light radiation, characterized in that said photoconductive material is provided in the shape of rows of independent pads (9) insulated from each other by an insulating material (6) and each located at one of said intersection points, and in that said light radiation successively exposes the rows of pads (9) of photoconductive material along said pattern.

2. Visualization screen according to claim 1, characterized in that said light radiation is generated by strips of electroluminescent material (3).

3. Visualization screen according to claim 2, characterized in that said electroluminescent material is based on zinc sulphide.

4. Visualization screen according to claims 2 or 3, characterized in that said electroluminescent strips are inserted between said counter-electrode (5) and control electrodes (2) arranged along said second pattern.

5. Visualization screen according to any of claims 1 to 4, characterized in that said electro-optical material (13) is a liquid crystal.

6. Visualization screen according to claim 5, characterized in that said liquid crystal is of nematic type operating with dynamic diffusion.

7. Visualization screen according to any of claims 1 to 6, characterized in that a storing capacity is branched in parallel on each visualization element.

FIG.1

FIG.2

# FIG.3

# FIG. 4

Informations

# FIG. 5